(19) Europäisches Patentamt / European Patent Office / Office européen des brevets

(11) **EP 2 869 083 B1**

(12) **FASCICULE DE BREVET EUROPEEN**

(45) Date de publication et mention de la délivrance du brevet:
**05.07.2017 Bulletin 2017/27**

(51) Int Cl.:
***G01S 19/20*** *(2010.01)*

(21) Numéro de dépôt: **14191167.7**

(22) Date de dépôt: **30.10.2014**

(54) **Procédé de contrôle d'intégrité de mesures satellites**

Verfahren zur Kontrolle der Integrität von Satellitenmessungen

Method for checking the integrity of satellite measurements

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2013 FR 1302529**

(43) Date de publication de la demande:
**06.05.2015 Bulletin 2015/19**

(73) Titulaire: **Safran Electronics & Defense
92100 Boulogne-Billancourt (FR)**

(72) Inventeur: **DESTELLE, Michel
92100 BOULOGNE-BILLANCOURT (FR)**

(74) Mandataire: **Regimbeau
20, rue de Chazelles
75847 Paris Cedex 17 (FR)**

(56) Documents cités:
**EP-A1- 2 120 060     EP-A1- 2 428 818
FR-A1- 2 964 468**

**Description**

DOMAINE DE L'INVENTION

Le domaine de l'invention est celui des systèmes de navigation radioguidés par des satellites de radionavigation.

L'invention concerne plus particulièrement un procédé de contrôle d'intégrité de mesures délivrées par des récepteurs de signaux de navigation émis par des satellites, de façon à détecter et à exclure plusieurs défaillances de satellites simultanées, et un dispositif adapté pour mettre en oeuvre un tel procédé.

ARRIERE PLAN DE L'INVENTION

Les porteurs comme les aéronefs ou encore les bateaux disposent de nombreux systèmes de navigation. Parmi ces systèmes, on compte notamment un équipement hybride INS/GNSS (de l'anglo-saxon « Inertial Navigation System » et « Global Navigation Satellite System »).

Une centrale inertielle fournit des informations peu bruitées et précises à court terme. Cependant, sur le long terme, les performances en localisation d'une centrale inertielle se dégradent (plus ou moins vite en fonction de la qualité des capteurs, accéléromètres ou gyroscopes par exemple, et des traitements utilisés par la centrale). Si les informations acquises auprès d'un système de radionavigation par satellites sont quant à elles très peu susceptibles de dériver sur le long terme, elles sont cependant souvent bruitées et d'une précision variable. Par ailleurs, les mesures inertielles sont toujours disponibles alors que les informations GNSS ne le sont pas ou sont susceptibles d'être leurrées et brouillées.

L'hybridation consiste à combiner les informations fournies par la centrale inertielle et les mesures fournies par le système de navigation par satellites pour obtenir des informations de position et de vitesse en tirant avantage des deux systèmes. Ainsi, la précision des mesures fournies par le récepteur GNSS permet de maîtriser la dérive inertielle et les mesures inertielles peu bruitées permettent de filtrer le bruit sur les mesures du récepteur GNSS.

Le modèle des mesures GNSS qui est connu ne tient pas compte des éventuelles défaillances satellites qui affectent les horloges ou les éphémérides transmises, ces défaillances se manifestant généralement sous la forme de biais ou de dérives ajoutées sur les mesures GNSS.

Dans ce cadre, des systèmes de contrôle d'intégrité ont pour but de détecter l'apparition de ces défaillances et d'exclure les satellites responsables afin de retrouver une solution de navigation ne contenant plus d'erreur non détectée.

Selon l'état de l'art, un banc de filtres de Kalman est classiquement utilisé pour se protéger contre une défaillance éventuelle d'un satellite. Dans un contexte INS/GNSS, chaque filtre réalise une hybridation entre des informations issues du système de navigation par satellite et celles issues de la centrale inertielle, et élabore une solution de navigation. Ces filtres ne font usage que d'une partie seulement des mesures GNSS disponibles (typiquement toutes les mesures GNNS à l'exception de celles provenant de l'un des satellites ; le satellite exclu étant différent d'un filtre à l'autre).

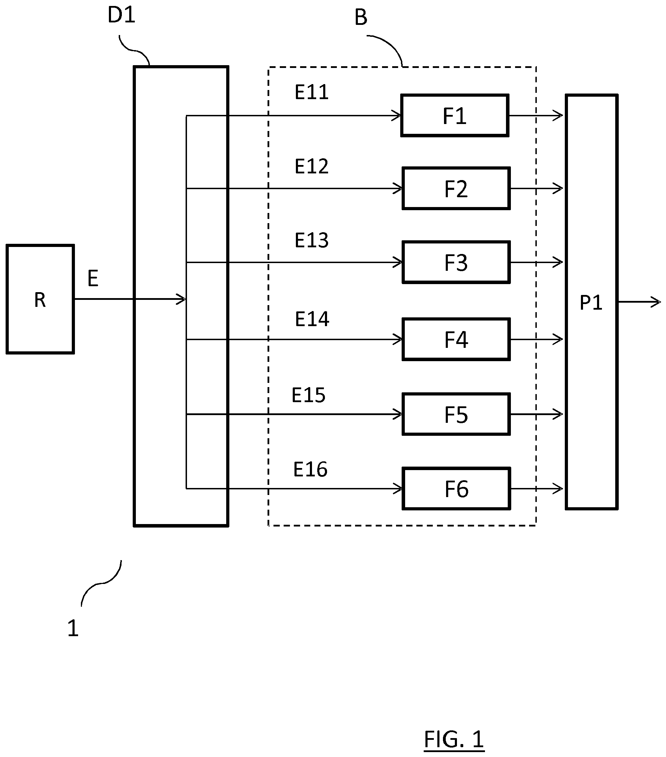

Est représenté en figure 1 un système de navigation 1 de l'état de l'art adapté pour mettre en oeuvre ce principe.

Le système 1 comprend un module de réception R adapté pour l'acquisition d'un ensemble primaire de mesures de signaux émanant de satellites de radionavigation, une unité de traitement de données D1, un banc B de filtres de Kalman F1-F6, et une unité de prise de décision P1.

L'unité de traitement de données D1 fournit à chaque filtre de Kalman un ensemble secondaire de mesures respectif E11-E16, chaque ensemble secondaire étant constitué par exclusion d'une mesure spécifique de l'ensemble primaire des mesures acquises. Le document FR 2 964 468 A1 met en oeuvre une telle exclusion de mesure spécifique.

Si une défaillance satellite survient, celle-ci n'est pas vue par le filtre de Kalman ne recevant pas la mesure du satellite défaillant: ce filtre n'est donc pas affecté par la défaillance et reste ainsi non pollué.

L'unité de prise de décision P1 identifie le satellite défaillant en comparant les mesures fournies par le satellite défaillant avec des estimations de ces mesures élaborées par chacun des filtres de Kalman.

Le satellite identifié comme étant en défaillance peut alors être exclu des solutions de navigation de manière à supprimer la pollution de l'état de navigation par la défaillance satellite.

Or, la multiplication des constellations de satellites dédiés à la navigation (GPS, Galileo, Glonass par exemple) augmente le nombre de satellites pouvant être utilisés dans un système de navigation hybride INS/GNSS.

Ainsi, les futurs systèmes de navigation, qui demanderont des exigences d'intégrité supérieures, seront contraints d'avoir la capacité de détecter et d'exclure plus d'une défaillance satellite.

Dans ce but, il est possible d'adapter un banc de filtres de Kalman pour la détection et l'isolation de plusieurs défaillances simultanées parmi N satellites.

Par exemple, pour détecter deux défaillances satellite simultanées, une solution pourrait consister à configurer chaque filtre de Kalman pour traiter un sous-ensemble respectif de N-2 mesures de signaux satellites, duquel deux mesures sont exclues, chaque paire de mesures exclues étant spécifique à un seul filtre de Kalman.

Toutefois, une telle solution nécessite la mise en oeuvre d'un très grand nombre de filtres de Kalman, c'est-à-dire autant de filtres que de couples de satellites choisis parmi les N satellites en vue, soit $C_N^2 = \frac{N(N-1)}{2}$ filtres. Par exemple, pour N=10, 45 filtres sont nécessaires ; pour N=20 on trouve 190 filtres.

## PRESENTATION DE L'INVENTION

Un but à atteindre est celui de réaliser un contrôle d'intégrité de mesures de navigation émises par des satellites qui permette de détecter et d'exclure plusieurs défaillances satellites de radionavigation simultanées, mais ne requérant qu'un nombre limité de filtres.

Il est donc proposé, selon un premier aspect, un procédé de contrôle d'intégrité d'un ensemble primaire de mesures obtenues à partir de signaux de navigation émis par des satellites et fournies à un dispositif de contrôle d'intégrité comprenant une pluralité de filtres de Kalman, le nombre de filtres de Kalman étant prédéterminé, le procédé comprenant les étapes de :

- définition, pour chaque filtre de Kalman, d'un ensemble secondaire de mesures contenues dans l'ensemble primaire,
- calcul par chaque filtre de Kalman d'une solution de navigation à partir d'un ensemble secondaire respectif de mesures,

le procédé étant caractérisé en ce que la définition des ensembles secondaires respecte les principes suivants :

- chaque mesure contenue dans l'ensemble primaire est présente dans au moins un des ensembles secondaires,
- pour chaque p-uplet de mesures de l'ensemble primaire, p étant un entier prédéterminé supérieur à 1, au moins un des ensembles secondaires ne contient pas ledit p-uplet de mesures,
- pour chaque ensemble secondaire, au moins un des p-uplets est exclu dudit ensemble secondaire,

et en ce qu'il comprend en outre les étapes de :

- détection, pour chaque solution de navigation, d'au plus p mesures défaillantes non-présentes dans l'ensemble secondaire à partir duquel la solution de navigation est élaborée, et
- signalement d'au plus p satellites défaillants dans l'ensemble primaire à partir des résultats respectifs des détections.

La stratégie de définition des ensembles secondaires selon ces règles permet de maximiser le nombre de mesures contenues dans chaque ensemble secondaire, pour obtenir au niveau du filtre FI correspondant de bonnes performances en termes de précision et de disponibilité, performances directement liées au nombre de mesures disponibles par filtre, et de minimiser le nombre d'ensemble secondaire.

Il en résulte que le procédé de contrôle d'intégrité proposé consomme, à nombre de satellites en vue égal, un nombre bien inférieur de filtres de Kalman que les procédés de l'art antérieur décrits en introduction. Le coût en ressources de calcul dans les filtres de Kalman est ainsi minimisé par rapports aux procédés de l'art antérieur.

Par ailleurs, le procédé proposé est économique et simple à mettre en oeuvre.

Selon un deuxième aspect, l'invention propose également un dispositif de contrôle d'intégrité adapté pour mettre en oeuvre le procédé selon le premier aspect.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1, déjà discutée, représente schématiquement un système de navigation connu.
- La figure 2 représente schématiquement un système de navigation selon un mode de réalisation de l'invention.
- La figure 3 représente les étapes d'un procédé de contrôle d'intégrité selon un mode de réalisation de l'invention.

## DESCRIPTION DETAILLEE DE L'INVENTION

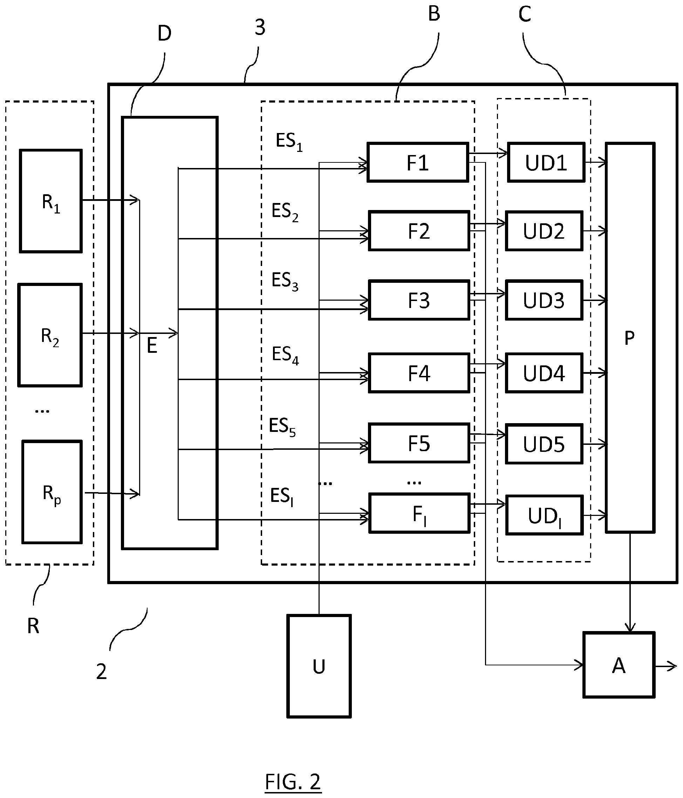

Ainsi qu'illustré sur la figure 2, un système de navigation 2 comprend un module R de réception de signaux satellites et un dispositif 3 de contrôle d'intégrité connecté au module d'acquisition.

Le système de navigation comprend également une unité de consolidation A (pouvant éventuellement être comprise dans le dispositif 3 de contrôle d'intégrité ou non), et une centrale inertielle U.

Le module de réception R est adapté pour acquérir une pluralité de mesures de signaux de radionavigation émis par des satellites. Ce module R peut à cet effet comprendre p récepteurs $R_1,...,R_p$, chaque récepteur étant dédié à la réception de signaux de radionavigation émanant d'un satellite respectif.

Le dispositif de contrôle d'intégrité comprend une unité de traitement de données D, un banc B de filtres de Kalman, un banc C d'unités de détection de défaillances, une unité de prise de décision primaire P.

L'unité de traitement de données D est configurée pour fournir des mesures acquises par le module de réception R aux filtres de Kalman ; la manière donc ces mesures sont sélectionnées par l'unité de traitement D sera décrite plus loin.

Par convention, on définit une « mesure » satellite comme un groupe élémentaire de données de navigation émanant d'un satellite respectif pouvant être traité par au moins un filtre de Kalman.

Le banc B de filtres de Kalman est constitué de plusieurs filtres $F_l$, l=1 à L, chaque filtre recevant de l'unité de traitement de données D un ensemble secondaire $ES_l$, l=1 à L, de mesures satellites respectif. Chaque filtre fonctionne indépendamment des autres filtres, par exemple en parallèle.

A chaque filtre $F_l$, est associée une unité de détection $UD_l$, l=1 à L, appartenant au banc C d'unités de détection de défaillances. Chaque unité de détection $UD_l$ est raccordée à la sortie d'un filtre de Kalman respectif $F_l$ et a également accès au contenu de l'ensemble primaire E.

Chaque unité de détection $UD_l$ est configurée pour détecter une ou plusieurs défaillances de satellite dont la mesure n'est pas présente dans l'ensemble secondaire $ES_l$ traité par le filtre de Kalman d'indice l placé en amont. Le fonctionnement interne de telles unités de détection $UD_l$ est connu en soi, et ne sera donc pas décrit en détail. On peut par exemple prévoir des unités de détections telles que décrites dans le document EP1752786A1.

On notera néanmoins que chaque unité de détection UDi fournit un résultat de détection au terme d'une comparaison des mesures de l'ensemble primaire E non présentes dans ESi avec des estimations de ces mesures élaborées par le Filtre de Kalman d'indice i . Le résultat de la détection est alors typiquement un nombre de mesures défaillantes parmi les mesures de l'ensemble primaire inférieur ou égal à p, p étant un entier prédéterminé dans le dispositif 3 de contrôle d'intégrité.

L'unité de prise de décision P est adaptée pour identifier et exclure un ou plusieurs satellites défaillants à partir de tous les résultats de détection fournis par les unités de détection $UD_l$, l=1 à L appartenant au banc C. La décision prise par l'unité de prise de décision est typiquement un ensemble d'identifiants de satellites (par exemple leur code PRN) défaillants, ou bien un ensemble vide en cas de non-défaillance.

L'unité de consolidation A est configurée pour élaborer une solution de navigation consolidée à partir de solutions de navigation élaborées par les filtres de Kalman $F_l$, l=1 à L, et à partir de la décision délivrée par l'unité de prise de décision P.

De même, cette unité de consolidation A est configurée pour élaborer des calculs de limite de protection englobant les solutions de ces sous-filtres (voir par exemple le document EP 2006707 B1 pour ces notions).

Le fonctionnement interne d'une telle unité de consolidation est également connu en soi, il ne sera donc pas davantage détaillé.

Les filtres de Kalman sont à titre d'exemple au nombre de L et référencés F1-Fl.

Le nombre de filtres du dispositif est déterminé avant l'exécution du procédé de contrôle d'intégrité dont les étapes vont maintenant être décrites.

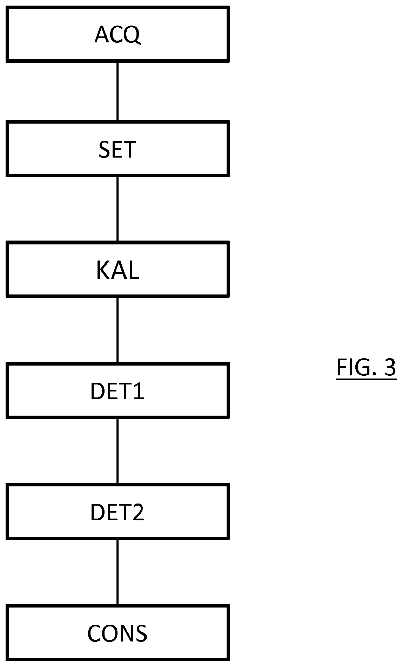

Les étapes d'un procédé de contrôle d'intégrité mise en oeuvre dans le système de la figure 2 sont illustrées sur la figure 3.

Dans une étape préliminaire ACQ, le module de réception R acquiert un ensemble E dit « primaire » de n mesures $m_i$, i=1 à n de signaux émis par des satellites de radionavigation, chaque mesure correspondant à un satellite respectif.

Dans une étape SET, l'unité de traitement de données D détermine, pour chaque filtre $F_l$, un ensemble secondaire $ES_l$ respectif de mesures $m_i$ à partir de l'ensemble primaire E de mesures acquises.

Dans une étape KAL, chaque filtre de Kalman $F_l$ calcule une solution de navigation respective à partir d'un ensemble secondaire $ED_l$ de mesures respectif. Dans le contexte d'une centrale d'hybridation, chaque filtre de Kalman peut prendre en entrée d'autres mesures, par exemple des mesures délivrées par la centrale inertielle U.

Dans une étape DET1, chaque unité de détection $UD_l$ détecte une ou plusieurs mesures défaillantes parmi les mesures n'appartenant pas à l'ensemble secondaire $ED_l$ de mesures traité par le filtre de Kalman agencé en amont. Ces détections sont de préférences exécutées en parallèle, afin de raccourcir le temps de traitement des mesures par le dispositif 3 de contrôle d'intégrité, ou bien successivement.

Dans une étape DET2, Les résultats de chaque unité de détection $UD_l$ sont traités par l'unité de prise de décision P. A partir des tous ces résultats, l'unité de prise de décision signale la présence de mesures défaillantes dans l'ensemble primaire E des défaillances, et identifie éventuellement les satellites défaillants correspondants.

Par exemple, dans le cas de deux défaillances simultanées, une première défaillance est détectée par une première unité de détection, et une deuxième défaillance est détectée par une deuxième unité de détection au cours de l'étape DET1. Dans ce cas, au cours de l'étape DET2, ces deux informations sont combinées pour conclure à une double défaillance. Dans la pratique, l'étape DET2 peut mettre des tests de comparaison entre des valeurs d'erreur et des seuils prédéterminés, ces tests étant eux-mêmes sujet à des défaillances. Ils sont en effet des tests statistiques pouvant ne pas détecter (on parle alors de détection manquée) ou détecter à tort (on parle dans ce cas de fausse alarme). Les seuils utilisés pour effectuer tests sont réglés de façon à maitriser de manière probabiliste ces défaillances. Donc, on peut détecter les défaillances prises en compte aux probabilités de détection manquée et de fausse alarme choisies.

Pour filtrer de telles fausses alarmes, peut être mise en oeuvre au niveau du module P une logique d'exclusion temporaire avec attente de confirmation de l'exclusion. En d'autres termes, chaque unité de détection prend une décision « locale » restreinte aux mesures de l'ensemble secondaire correspondand, tandis que le module P effectue une prise de décision globale qui utilise une correspondance ou non entre les décisions locales prises par les unités UDi et la répartition des ensembles de mesures Esi, ces sous-ensembles étant judicieusement choisis pour permettre la plus part du temps la consolidation des décisions des unités de détection UDi.

Les principes de prise de décision de détections de défaillance et d'exclusions de mesure défaillantes élaborés par l'unité de prise de décision P reposent sur les hypothèses suivantes:

- On posera qu'un filtre de Kalman $F_l$ est sensible à une défaillance, s'il traite une ou plusieurs mesures associées à cette défaillance,
- on posera le principe conservatif suivant : une unité de détection UDl associé à un filtre $F_l$ sensible à une défaillance est elle-même défaillante.

Le principe de détection de défaillance mis en oeuvre par l'unité de prise de décision P peut être le suivant : si au moins une unité de détection $UD_l$ associé à un filtre Fl décide d'une détection de défaillance, alors de manière conservative, l'unité de prise de décision déclarera la présence d'une défaillance, que cette détection soit décidée avec raison (cas où l'$UD_l$ est non défaillante) ou que cette détection soit décider à tort (cas où l'$UD_l$ est défaillante).

D'autres principes de détection de défaillance moins conservatifs peuvent toutefois être mis en oeuvre par l'unité de prise de décision P.

Par ailleurs, le principe d'exclusion de défaillance mis en oeuvre par l'unité de prise de décision P peut être par exemple le suivant: si toute les unités de détection $UD_l$ associé tous les filtres Fl décident d'une détection de défaillance, alors de manière conservative on déclarera l'exclusion de cette défaillance, que ces détections soit décidées avec raison (cas où certaines $UD_l$ sont non défaillantes) ou que ces détections soit décidées à tort (cas où certaines $UD_l$ sont défaillantes).

D'autres principes d'exclusion de défaillance moins conservatifs peuvent toutefois être mis en oeuvre par l'unité de prise de décision P.

Dans une étape CONS, l'unité de consolidation A élabore une solution de navigation dite « consolidée » à partir des solutions de navigation délivrées par les filtres de Kalman et des éventuelles mesures identifiées par l'unité de prise de décision. La solution de navigation est consolidée dans le sens où elle permet d'assurer les besoins d'intégrité pour une probabilité de perte d'intégrité donnée, pour tous les cas de défaillance envisagés.

*Détermination des ensembles secondaires pour des hypothèses de défaillances limitées à p défaillances simultanées*

A titre préliminaire, on posera les principes suivants.

On posera $Es_l$ l'ensemble secondaire d'indice l, comme un sous ensemble de l'ensemble E.

On définira une hypothèse de défaillance comme une hypothèse de défaillance d'un ou de plusieurs satellites. On pourra donc faire correspondre à une hypothèse de défaillance donnée, un sous-ensemble de mesures appartenant à E, mesures émises par les satellites défaillant selon l'hypothèse considérée.

On posera $ed_j$ d'indice j comme un sous-ensemble de l'ensemble primaire E correspondant aux mesures associées à l'hypothèse de défaillance j, hypothèse de défaillance correspondant à la défaillance simultanée de ces mesures associées.

On posera également $Ed_k$ d'indice k comme ensemble regroupant les ensembles $ed_j$ d'indice j pour toutes les hypothèses de défaillance correspondant à la défaillance simultanée de k mesures satellite.

On posera $ed_{cons\,j}$ d'indice j comme un sous-ensemble de E correspondant aux mesures associées à l'hypothèse de défaillance de la constellation j, hypothèse de défaillance correspondant à la défaillance simultanée de toute les mesures des satellites appartenant à cette j$^{ième}$ constellation.

On posera $Ed_{cons}$ comme ensemble regroupant les ensembles $ed_{cons\,j}$ d'indice j pour toutes les hypothèses de défaillance de constellation.

On posera, selon différentes variantes possibles des étapes DET1 et DET2, Ed comme ensemble regroupant certains des ensembles $Ed_k$ d'indice k et regroupant possiblement l'ensemble $Ed_{cons}$.

Si par exemple on veut considérer les hypothèses de défaillance d'une mesure parmi les n mesures disponibles, notées $m_1, m_2, ..., m_n$ on considérera alors l'ensemble $Ed_1$ comme regroupant les n ensembles $ed_{1i}$ i de 1 à n ensembles à un élément formée par la mesure i.

$$Ed_1 = \{\{ed_{11}\},\{ed_{12}\},...\{ed_{1n}\}\}=\{\{m_1\},\{m_2\},...\{m_n\}\}$$

Si par exemple on veut considérer les hypothèses de défaillance de deux mesures simultanées parmi les n mesures disponibles, on considérera alors l'ensemble $Ed_2$ comme regroupant les q ensembles contenant *chacun un des couples de mesures i,j choisies parmi les m mesures, avec* $q = C_n^2 = \frac{n(n-1)}{2}$.

$$
\begin{aligned}
Ed_2 \quad = \quad & \{\{ed_{21}\},\{ed_{22}\},...\{ed_{2q}\}\}, \text{ avec } q = C_n^2 = \frac{n(n-1)}{2} \\
= \quad & \{\{m_1,m_2\},\{m_1,m_3\},...\{m_1,m_n\}, \\
& \{m_2,m_3\},\{m_2,m_4\},...\{m_2,m_n\}, \\
& ... \\
& \{m_{n-2},m_{n-1}\},\{m_{n-2},m_n\}, \\
& \{m_{n-1},m_n\}\}.
\end{aligned}
$$

En généralisant, pour considérer les hypothèses de défaillance de p mesures simultanées parmi les n mesures disponibles, on considérera alors l'ensemble $Ed_p$ comme regroupant les q ensembles $e_{pq}$ contenant chacun un des p-uplets de mesures choisies parmi les n mesures avec $q = C_n^p = \frac{n!}{p!(n-p)!}$. $Ed_p$ = {ensemble des q $ed_{pl}$, avec l=1 à q} avec $q = C_n^p = \frac{n!}{p!(n-p)!}$,

avec $ed_{pl} = \{m_{pl1},m_{pl2},...,m_{plp}\}$ avec (pl1=1à n),(pl2=1à n),...,(plp=1à n) et avec (pl1<pl2...<plq).

Si par exemple on considère les hypothèses de la défaillance globale de constellation, dans le cas le système reçoit des mesures de satellites appartenant à nc constellations, on considérera alors l'ensemble $Ed_{cons}$ comme regroupant les nc ensembles $Ed_{cons\ i}$ pour i = 1 à nc, formés chacun par l'ensemble des mesures des satellites appartenant à une même constellation.

$$Ed_{cons} = \{\ ed_{cons\ 1}\ ,\ ed_{cons\ 2}\ ,...,\ ed_{cons\ nc}\},$$

Avec $e_{cons\ i}$ {ensemble des mesures de la constellation i}}. Si par exemple on fait l'hypothèse que chaque constellation comprend 10 satellites en vue, les dix premiers appartenant à la première constellation, les dix suivants appartenant à la deuxième constellation, et ainsi de suite jusqu'à la nième constellation, on a :

$$
\begin{aligned}
Ed_{cons} = \quad & \{ed_{cons\ 1}\ ,\ ed_{cons\ 2}\ ,...,\ ed_{cons\ nc}\} \\
= \quad & \{\{m_1,m_2,...,m_{10}\}, \\
& \{m_{11},m_{12},...,m_{20}\}, \\
& ... \\
& \{m_{10*(nc-1)+1},m_{10*(nc-1)+2},...,m_{10*nc}\}\}
\end{aligned}
$$

On peut aussi considérer la réunion de tels ensembles :

- Ainsi si l'on veut considérer les hypothèses de défaillance d'une mesure et aussi de deux mesures simultanées, l'ensemble des ensembles de mesures possiblement défaillantes est égal à la réunion des ensembles $Ed_1$ et $Ed_2$.
- Ainsi si l'on veut considérer les hypothèses de défaillance d'une mesure, de deux mesures simultanées ainsi que les défaillances globale de constellation l'ensemble des ensembles de mesures possiblement défaillantes est égal à la réunion des ensembles $Ed_1$ , $Ed_2$ et $Ed_{cons.}$

Ces définitions étant posées, l'étape SET détermine le contenu des ensembles secondaires selon certaines règles qui vont maintenant être détaillées.

- considérant un ensemble primaire E de mesures $m_i$ i de 1 à n , E = {$m_1,m_2,...m_n$},
- considérant des ensembles secondaires de mesures $ES_l$ ,l=1 à L chacun sous-ensemble de E,
- considérant un ensemble Ed d'ensemble de mesures possiblement défaillantes $ed_i$, i=1 à q, chaque ensemble de mesures possiblement défaillantes ei étant un sous-ensemble de E, associée à une hypothèse de défaillance i correspondante,

alors les L ensembles secondaires ES doivent respecter les principes suivants.

Premièrement, pour chaque mesure $m_i$ ,i de 1 à n, il existe au moins un ensemble secondaire $ES_l$ , $1 \leq l \leq L$, comprend cette mesure.

La justification de ce premier principe repose sur le fait que si une mesure n'est comprise dans aucun ensemble secondaire, alors cette mesure est inutile.

Deuxièmement, pour chaque ensemble de mesures possiblement défaillantes edi, i de 1 à q il existe au moins un ensemble secondaire ESI, $1 \leq l \leq L$, qui ne contient pas cet ensemble de mesures.

La justification de ce deuxième principe repose sur le fait que pour toutes les défaillances prises en compte, donc pour tous les ensembles $ed_i$, i de 1 à q de mesures possiblement défaillantes, il existe au moins un ensemble secondaire $ES_l$ , $1 \leq l \leq L$, qui ne contient pas cet ensemble de mesures possiblement défaillantes, donc il existe au moins un filtre $F_l$ associé à l'ensemble secondaire $ES_l$ qui reste insensible (i.e. non défaillant) à cette défaillance.

Troisièmement, pour chaque ensemble secondaire ESI , $1 \leq l \leq L$, il existe au moins un ensemble de mesures possiblement défaillantes edi, i de 1 à q qui n'appartient pas à cet ensemble secondaire.

La justification de ce troisième principe repose sur le fait que si un ensemble secondaire $ES_l$ , $1 \leq l \leq L$ n'est insensible à aucune défaillance $ed_i$, i de 1 à q, le filtre $F_l$ associé à cet ensemble secondaire n'apporte rien pour en terme d'intégrité car il est toujours potentiellement défaillant en cas de défaillance.

La stratégie d'élaboration de ces ensembles secondaires $ES_l$ , $1 \leq l \leq L$ selon ces trois principes permet de maximiser le nombre de mesures contenues dans chaque ensemble secondaire $ES_l$ , $1 \leq l \leq L$, pour obtenir au niveau du filtre Fl correspondant de bonnes performances en termes de précision et de disponibilité, performances directement liées au nombre de mesures disponibles par filtre, et de minimiser le nombre d'ensemble secondaire ESl , $1 \leq l \leq L$, pour avoir un coût en ressources de calcul le plus petit possible dans les filtres de Kalman.

Les principes énoncés ci-dessus peuvent être complétés à l'aide de principes optionnels.

Un premier principe optionnel peut consister en ce que chaque ensemble secondaire ESl , $1 \leq l \leq L$ comprend au moins 3+nc mesures, avec nc = le nombre de constellation GNSS à prendre en compte. Dans la suite, ce premier principe optionnel sera désigné sous le nom « variante 1 ».

Si l'on fait l'hypothèse conservative que les biais de temps associés à chacune des constellations sont des variables indépendantes, disposer d'au moins $3+n_c$ mesures permet d'obtenir une solution de position, de vitesse et de temps. Cette variante 1 permet donc d'obtenir une solution de position, de vitesse et de temps par filtre Fl, $1 \leq l \leq L$ associé aux ensembles secondaires $ES_l$ , $1 \leq l \leq L$.

Par ailleurs, on peut également ajouter un deuxième principe optionnel consistant en ce que pour chaque mesure mi, i de 1 à n et pour chaque ensemble de mesures possiblement défaillantes edj ,j de 1 à q, il existe au moins un ensemble secondaire ESl , $1 \leq l \leq L$, qui ne contient ni cette mesure mi, ni cet ensemble de mesures possiblement défaillante edj. Dans la suite, ce principe optionnel sera désigné sous le terme « variante 2 ».

Cette variante 2 permet de renforcer les principes d'exclusions en cas de défaillance détectée. En effet, pour une mesure donnée $m_i$, et pour un ensemble de mesures possiblement défaillantes $ed_j$ donnée, il existe au moins un filtre $F_l$ associé à un ensemble secondaire $ES_l$ qui n'est pas défaillant, donc son unité de détection associée $UD_l$, n'est pas défaillante, elle sera donc capable de prendre une décision non défaillante correspondant à la mesure $m_i$. Ceci est vrai pour toutes les mesures $m_i$, i de 1 à m, et pour chaque ensemble de mesures possiblement défaillantes $ed_j$ ,j de 1 à q.

Par exemple, dans le cas de défaillance d'une constellation de satellites (c'est-à-dire lorsque tous les satellites de cette constellation sont simultanément défaillants), et si deux constellations sont représentées dans les mesures de l'ensemble primaire, on ne pourra pas identifier la constellation défaillante. Dans le cas de pannes simultanées d'un p-uplet de satellites, en appliquant la variante 2 on renforce l'identification de ce p-uplet. En effet, à toute mesure mj n'appartenant pas à ce p-uplet il existe dans ce cas au moins un filtre de Kalman $F_k$ d'indice k qui ne contient ni cette mesure mj ni ce p-uplet. Dans ce cas, L'unité de détection UDk associée au filtre $F_k$ va déclarer (pour une probabilité de fausse alarme prédéterminée) la mesure mj comme valide.

Bien entendu, les variantes 1 et 2 peuvent être cumulées dans un même mode de réalisation du procédé de contrôle d'intégrité.

*Détermination des ensembles secondaires pour des hypothèses de défaillances limitées à au plus 2 défaillances simultanées*

L'application des principes d'élaboration des ensembles secondaires (et des variantes optionnelles 1 et 2) dans le cas d'hypothèses de défaillances limitées à au plus 2 défaillances simultanées de satellite consiste à poser p=2. On a dans ce cas :

- E : ensemble primaire E de mesures $m_i$ i de 1 à n, E = $\{m_1, m_2, ... m_n\}$,
- $ES_l$, l=1 à L : ensembles secondaires de mesures $ES_i$ ,l = 1 à L, chacun sous-ensemble de E,
- Ed : ensemble Ed d'ensemble de mesures possiblement défaillantes $ed_i$, i = 1 à n+n(n-1)/2, avec :

  ○ $ed_i$ : sous-ensemble de mesures possiblement défaillantes pour toutes les hypothèses correspondant à une défaillance satellite ou à deux défaillances satellites,
  ○ $ed_i$ = $\{m_k\}$, pour k = 1 à n et pour i = 1 à n,
  ○ $ed_i$ = $\{m_k, m_l\}$, pour k = 1 à n, pour l = 1 à n, pour k<l et pour i =n+1 à n+n(n-1)/2/

Les L ensembles secondaires ES doivent respecter les principes suivants :

- pour chaque mesure mi ,i de 1 à n, il existe au moins un ensemble secondaire ESI , 1≤l≤L, qui prend en compte cette mesure ;
- pour chaque couple de mesures {mi, mj}, i de 1 à n, j de 1 à n il existe au moins un ensemble secondaire ESI , 1≤l≤L, qui ne contient pas ce couple de mesures ;
- pour chaque ensemble secondaire ESI , 1≤l≤L, il existe au moins un couple de mesures {mi, mj}, i de 1 à n, j de 1 à n qui n'appartient pas à cet ensemble.

Si la variante 1 est mise en oeuvre, chaque ensemble secondaire ESI , 1≤l≤L doit comprendre au moins 3+nc mesures, avec nc = le nombre de constellation GNSS.

Si la variante 2 est par ailleurs mise en oeuvre, alors pour chaque triplet de mesures {mi,mj,mk}, i de 1 à n , j de 1 à n, k de 1 à n, i≠j≠k, il existe au moins un ensemble secondaire ESI , 1≤l≤L, qui ne contient pas ce triplet {mi,mj,mk}.

L'ensemble des principes à appliquer pour les ensembles de couple de mesures correspondant aux hypothèses de deux défaillances simultanées couvrent aussi les principes à appliquer pour les ensembles de mesure simple correspondant aux hypothèses de défaillance simple.

*Détermination des ensembles secondaires pour des hypothèses de défaillances limitées à au plus p défaillances simultanées*

L'application des principes d'élaboration des ensembles secondaires et des variantes optionnelles dans le cas d'hypothèse de défaillances limitées à au plus p défaillances simultanées de satellites consiste à poser plus généralement:

- E : ensemble primaire E de mesures $m_i$ i de 1 à n, E = $\{m_1, m_2, ... m_n\}$,
- $ES_l$,l = 1 à L : ensembles secondaires de mesures $ES_l$ ,l = 1 à L, chacun sous-ensemble de E,
- Ed : ensemble Ed d'ensemble de mesures possiblement défaillantes $ed_i$, i = 1 à $C_n^1 + C_n^2 + \cdots + C_n^p$ avec :

  - $ed_i$ : sous-ensemble de mesures possiblement défaillantes pour toutes les hypothèses correspondant à une défaillance satellite
  - $ed_i$ = $\{m_{k1}\}$,

    pour $k_1$ = 1 à n,
    pour i = 1 à

    $C_n^1$,
  - $ed_i$ = $\{m_k, m_{k2}\}$,

    pour $k_i$ = 1 à n, pour $k_2$ = 1 à n,
    pour $k_1 < k_2$,

pour $i = C_n^1 + 1$ à $C_n^1 + C_n^2$,

- $ed_i = \{m_{k1}, m_{k2},..., m_{kp}\}$,

pour $k_1 = 1$ à n,
pour $k_2 = 1$ à n,
...,
pour $k_p = 1$ à n,
pour $k_1 < k_2 < ... < k_p$,
pour $i = C_n^1 + C_n^2 + \cdots + C_n^{p-1} + 1$ à $C_n^1 + C_n^2 + \cdots + C_n^p$.

Les L ensembles secondaires ES doivent respecter les principes suivants.

Pour chaque mesure mi ,i de 1 à n, il existe au moins un ensemble secondaire ESI , 1≤l≤L, qui prend en compte cette mesure.

Pour chaque p-uplet de mesures {mk1, mk2,..., mkp}, pour k1 = 1 à n, pour k2 = 1 à n,...,pour kp = 1 à n, k1≠k2≠...≠kp il existe au moins un ensemble secondaire ESI , 1≤l≤L, qui ne contient pas ce p-uplet de mesures.

Pour chaque ensemble secondaire ESI , 1≤l≤L, il existe au moins un p-uplet de mesures {mk1, m k2,..., mkp}, pour k1 = 1 à n, pour k2 = 1 à n,...,pour kp = 1 à n, k1≠k2≠...≠kp qui n'appartient pas à cet ensemble.

Si la variante 1 est mise en oeuvre, chaque ensemble secondaire ESI , 1≤l≤L comprend au moins 3+nc mesures, avec nc = le nombre de constellation GNSS.

Si la variante 2 décrite précédemment est mise en oeuvre, pour tout (p+1) uplet de mesures {mk1, m k2,..., mkp, mkp+1}, pour k1 = 1 à n, pour k2 = 1 à n,...,pour kp = 1 à n, pour kp+1 = 1 à n k1≠k2≠...≠kp≠kp+1 ,il existe au moins un ensemble secondaire ESI , 1≤l≤L, qui ne contient pas ce (p+1) uplet {mk1, m k2,..., mkp, mkp+1}.

Les principes à appliquer pour les p-uplets de mesures correspondant aux hypothèses de p défaillances simultanées mais couvrent aussi les principes à appliquer pour les ensembles de (p-1)-uplets correspondant aux hypothèses de p-1 défaillances simultanées, et ainsi de suite, jusqu'aux principes à appliquer pour les ensembles de mesure simple correspondant aux hypothèses de simple défaillance.

*Détermination des ensembles secondaires et des variantes pour des hypothèses de défaillances limitées à au plus deux défaillances simultanées, et robuste à une défaillance globale de constellation*

L'application de principes d'élaboration des ensembles secondaires et des variantes optionnelles dans le cas d'hypothèse de défaillances limitées à au plus deux défaillances simultanées de satellites, et par ailleurs robuste à la défaillance globale d'une constellation consiste à poser :

- E : ensemble primaire E de mesures $m_i$ i de 1 à n, E = {$m_i$,$m_2$,...$m_n$},
- $ES_l$ ,l = 1 à L : ensembles secondaires de mesures $ES_l$ ,l = 1 à L, chacun sous-ensemble de E,
- Ed : ensemble Ed d'ensemble de mesures possiblement défaillantes $ed_i$, i = 1 à n+n(n-1)/2+$n_c$, avec :

    ∘ $ed_i$ : sous-ensemble de mesures possiblement défaillantes pour toutes les hypothèses correspondant à une défaillance satellite ou à deux défaillances satellites,
    ∘ $ed_i$ = {$m_k$}, pour k = 1 à n et pour i = 1 à n,
    ∘ $ed_i$ = {$m_k$, $m_l$}, pour k = 1 à n, pour l = 1 à n, pour k<l et pour i = n+1 à n+n(n-1)/2,
    ∘ $ed_i$ = {ensemble des mesures des satellites de la constellation j}, pour j = 1 à $n_c$, et pour i = n+1 à n+n(n-1)/2+1 à n+n(n-1)/2+$n_c$,

Les L ensembles secondaires ES doivent respecter les principes suivants.

Pour chaque mesure mi, i de 1 à n, il existe au moins un ensemble secondaire ESI ,1≤l≤L, qui prend en compte cette mesure.

Pour chaque couple de mesures {mi, mj}, i de 1 à n, j de 1 à n il existe au moins un ensemble secondaire ESI ,1≤l≤L, qui ne contient pas ce couple de mesures.

Pour chaque ensemble des mesures des satellites de la constellation j , j de 1 à nc il existe au moins un ensemble secondaire ESI ,1≤l≤L, qui ne contient pas cet ensemble.

Pour chaque ensemble secondaire ESI ,1≤l≤L, il existe au moins un couple de mesures {mi, mj}, i de 1 à n, j de 1 à n qui n'appartient pas à cet ensemble secondaire.

Pour chaque ensemble secondaire ESI ,1≤l≤L, il existe au moins un ensemble des mesures des satellites de la constellation j, j de 1 à nc qui n'appartient pas à cet ensemble.

Si la variante 1 du procédé est appliquée, chaque ensemble secondaire ESI, $1 \leq l \leq L$ doit comprendre au moins 3+nc mesures, avec nc = le nombre de constellation GNSS à prendre en compte.

Si la variante 2 du procédé est appliquée, alors :

- pour chaque triplet de mesures {mi,mj,mk}, i de 1 à n , j de 1 à n, k de 1 à n, i≠j≠k, il existe au moins un ensemble secondaire ESI ,$1 \leq l \leq L$, qui ne contient pas ce triplet {mi,mj,mk}, et
- Pour chaque couple de constellation i,j , i de 1 à nc , j de 1 à nc, i≠j, il existe au moins un ensemble secondaire ESI ,$1 \leq l \leq L$, qui ne contient pas l'ensemble des mesures des satellites associés à ce couple de constellations.

L'ensemble des principes à appliquer pour les ensembles de couple de mesures correspondant aux hypothèses de deux défaillances simultanées couvrent aussi les principes à appliquer pour les ensembles de mesure simple correspondant aux hypothèses de simple défaillance.

Des exemples pratiques de réalisation d'ensembles secondaires, pour des configurations particulières de mise en oeuvre du procédé décrit précédemment, vont maintenant être décrits.

Pour chacun de ces exemples, sera présenté un tableau montrant la composition de chaque ensemble secondaire élaboré, en fonction de mesures présentes dans l'ensemble primaire. Chaque « X » désignera l'exclusion d'une mesure de l'ensemble primaire dans un ensemble secondaire ESi.

*Premier exemple de réalisation*

Dans un premier exemple de réalisation, les paramètres de mise en oeuvre du procédé de contrôle d'intégrité sont les suivants :

- Nombre de mesures : N=10.
- Hypothèse de défaillance : 1 défaillance satellite.
- Nombre d'ensemble secondaires et de filtres de Kalman: L=3.
- Variante 1: Prise en compte.
- Variante 2: Non prise en compte.

$$E = \{m_1, m_2, \ldots m_{10}\},$$

$$Ed = \{\{m_1\}, \{m_2\}, \ldots \{m_{10}\}\}.$$

La composition des ensembles secondaires est alors la suivante:

| #mesure | ES$_1$ | ES$_2$ | ES$_3$ |
|---------|--------|--------|--------|
| 1 | X | | |
| 2 | X | | |
| 3 | X | | |
| 4 | | X | |
| 5 | | X | |
| 6 | | X | |
| 7 | | | X |
| 8 | | | X |
| 9 | | | X |
| 10 | | | X |

Le procédé configuré selon ce premier exemple est robuste à une défaillance ; il permet de réaliser une intégrité capable de détecter une défaillance et d'exclure un satellite de navigation avec 3 filtres ayant chacun 6 à 7 mesures disponibles, au lieu des 10 filtres rendus nécessaires dans la solution à n filtres discutée en introduction.

*Deuxième exemple de réalisation*

Dans un deuxième exemple de réalisation, les paramètres de mise en oeuvre du procédé de contrôle d'intégrité sont les suivants :

- Nombre de mesures : 10,
- Hypothèse de défaillance : 1 ou 2 défaillances satellite simultanées,
- Nombre d'ensemble secondaires et de filtres de Kalman: L=10.
- Variante 1: Prise en compte.
- Variante 2: Non prise en compte.

$$E = \{m_1, m_2, ... m_{10}\},$$

$$Ed = \{\{m_1\}, \{m_2\}, ..., \{m_{10}\},$$

$$\{m_1, m_2\}, ..., \{m_1, m_{10}\},$$

$$\{m_2, m_3\}, ..., \{m_2, m_{10}\},$$

$$, ...,$$

$$\{m_8, m_9\}, ..., \{m_8, m_{10}\},$$

$$\{m_9, m_{10}\}\}.$$

La composition des ensembles secondaires est alors la suivante:

| #mesure | $ES_1$ | $ES_2$ | $ES_3$ | $ES_4$ | $ES_5$ | $ES_6$ | $ES_7$ | $ES_8$ | $ES_9$ | $ES_{10}$ |
|---------|--------|--------|--------|--------|--------|--------|--------|--------|--------|-----------|
| 1 | X | | | X | | X | X | | | |
| 2 | X | | | X | | X | X | | | |
| 3 | | X | | | X | X | | X | | |
| 4 | | X | | | X | X | | X | | |
| 5 | X | | X | | | | | X | X | |
| 6 | X | | X | | | | | X | X | |
| 7 | | X | | X | | | | | X | X |
| 8 | | X | | X | | | | | X | X |
| 9 | | | X | | X | | X | | | X |
| 10 | | | X | | X | | X | | | X |

Le procédé configuré selon ce deuxième exemple est robuste à une défaillance satellite et à deux défaillances satellites simultanées. Il permet de réaliser une intégrité capable de détecter jusqu'à deux défaillances simultanées et d'exclure jusqu'à deux satellites de radionavigation simultanément avec 10 filtres ayant chacun 6 mesures disponibles, au lieu des 45 filtres rendus nécessaires dans la solution à n*(n-1)/2 filtres discutée en introduction.

*Troisième exemple de réalisation*

Dans un troisième exemple de réalisation, les paramètres de mise en oeuvre du procédé de contrôle d'intégrité sont les suivants :

- Nombre de mesures : N=20.
- Nombre de constellations : nc=2.
- Hypothèses de défaillance : 1 ou 2 défaillances satellite simultanées ou 1 défaillance de constellation.

- Nombre d'ensemble secondaires et de filtres de Kalman : L=3.
- Variante 1: Prise en compte.
- Variante 2: Non prise en compte.

$$E = \{m_1, m_2, ... m_{20}\},$$

Mesures de la constellation 1 : $\{m_1, m_2, ... m_{10}\}$,
Mesures de la constellation 2 : $\{m_{11}, m_{12}, ... m_{20}\}$,

$$Ed = \{\{m_1\}, \{m_2\}, ..., \{m_{10}\},$$

$$\{m_1, m_2\}, ..., \{m_1, m_{20}\},$$

$$\{m_2, m_3\}, ..., \{m_2, m_{20}\},$$

$$, ..., $$

$$\{m_{18}, m_{19}\}, ..., \{m_{18}, m_{20}\},$$

$$\{m_{19}, m_{20}\},$$

$$\{m_1, m_2, ... m_{10}\}, \{m_{11}, m_{12}, ... m_{20}\}\}.$$

La composition des ensembles secondaires est alors la suivante:

| #mesure | $ES_1$ | $ES_2$ | $ES_3$ |
|---|---|---|---|
| 1 | | X | X |
| 2 | | X | X |
| 3 | | X | X |
| 4 | | X | X |
| 5 | | X | X |
| 6 | | X | X |
| 7 | | X | X |
| 8 | X | | X |
| 9 | X | | X |
| 10 | X | | X |
| 11 | X | | X |
| 12 | X | | X |
| 13 | X | | X |
| 14 | X | | X |
| 15 | X | X | |
| 16 | X | X | |
| 17 | X | X | |
| 18 | X | X | |
| 19 | X | X | |
| 20 | X | X | |

Le procédé configuré selon ce troisième exemple est robuste à une défaillance satellite, à deux défaillances satellites simultanées, et à une défaillance globale d'une des constellations. Il permet de réaliser une intégrité capable de détecter jusqu'à deux défaillances simultanées et d'exclure jusqu'à deux satellites de radionavigation simultanément avec 3 filtres ayant chacun 6 à 7 mesures disponibles, au lieu des 190 filtres rendus nécessaires dans la solution à n*(n-1)/2 filtres discutée en introduction.

*Quatrième exemple de réalisation*

Dans un quatrième exemple de réalisation, les paramètres de mise en oeuvre du procédé de contrôle d'intégrité sont les suivants :

- Nombre de mesures : N=20.
- Nombre de constellations : nc=2.
- Hypothèses de défaillance : 1 ou 2 défaillances satellite simultanées ou 1 défaillance de constellation.
- Nombre d'ensemble secondaires et de filtres de Kalman : L=10.
- Variante 1: Prise en compte.
- Variante 2: Non prise en compte.

$$E = \{m_1, m_2, ... m_{20}\},$$

Mesures constellation 1 : $\{m_1, m_2, ... m_{10}\}$,
Mesures constellation 2 : $\{m_{11}, m_{12}, ... m_{20}\}$,

$$Ed = \{\{m_1\}, \{m_2\}, ..., \{m_{10}\},$$
$$\{m_1, m_2\}, ..., \{m_1, m_{20}\},$$
$$\{m_2, m_3\}, ..., \{m_2, m_{20}\},$$
$$, ..., $$
$$\{m_{18}, m_{19}\}, ..., \{m_{18}, m_{20}\},$$
$$\{m_{19}, m_{20}\},$$
$$\{m_1, m_2, ... m_{10}\}, \{m_{11}, m_{12}, ... m_{20}\}\}.$$

La composition des ensembles secondaires est alors la suivante:

| mesure | ES$_1$ | ES$_2$ | ES$_3$ | ES$_4$ | ES$_5$ | ES$_6$ | ES$_7$ | ES$_8$ | ES$_9$ | ES$_{10}$ |
|---|---|---|---|---|---|---|---|---|---|---|
| 1 | X | | X | X | X | | | | | |
| 2 | X | | X | X | X | | | | | |
| 3 | X | | X | X | X | | | | | |
| 4 | X | | X | X | X | | | | | |
| 5 | X | | | | | X | X | X | | |
| 6 | X | | | | | X | X | X | | |
| 7 | X | | | | | X | X | X | | |
| 8 | X | | | | | X | X | X | | |
| 9 | X | | | | | | | | X | X |
| 10 | X | | | | | | | | X | X |
| 11 | | X | X | | | X | | | X | |
| 12 | | X | X | | | X | | | X | |

(suite)

| mesure | $ES_1$ | $ES_2$ | $ES_3$ | $ES_4$ | $ES_5$ | $ES_6$ | $ES_7$ | $ES_8$ | $ES_9$ | $ES_{10}$ |
|--------|--------|--------|--------|--------|--------|--------|--------|--------|--------|-----------|
| 13 | | X | X | | | X | | | X | |
| 14 | | X | | X | | | X | | X | |
| 15 | | X | | X | | | X | | X | |
| 16 | | X | | X | | | X | | | X |
| 17 | | X | | | X | | | X | | X |
| 18 | | X | | | X | | | X | | X |
| 19 | | X | | | X | | | X | | X |
| 20 | | X | | | X | | | X | | X |

Le procédé configuré selon ce quatrième mode de réalisation est robuste à une défaillance satellite et à deux défaillances satellites simultanées et à une défaillance globale d'une constellation ; il permet de réaliser une intégrité capable de détecter jusqu'à deux défaillances simultanées et d'exclure jusqu'à deux satellites de radionavigation simultanément avec 10 filtres ayant chacun 10 à 13 mesures disponibles, au lieu des 190 filtres rendus nécessaires dans la solution à n*(n-1)/2 filtres discutée en introduction.

Le procédé de contrôle d'intégrité ne se limite pas aux cas aux exemples de réalisation décrit précédemment, mais peut bien entendu être appliqué dans tous les cas qui s'appuient sur les principes et variantes présentés dans le présent document.

De façon générale, les ensembles secondaires constitués peuvent présenter un nombre égal de mesures, ou un nombre différent.

On cherchera dans tous les cas à minimiser le cardinal moyen des ensembles d'entrée des filtres de Kalman, de façon à équilibrer la charge de calcul entre les différents filtres de Kalman exécutés en parallèle, et donc d'éviter qu'un filtre de Kalman ayant à traiter une solution de navigation à partir d'un grand nombre de mesures par rapports aux autres filtres, ne retarde la détection et l'isolation des défaillances.

Le nombre d'ensembles secondaires élaborés peut être fixe, ou bien être variable. Le nombre d'ensembles secondaires peut par exemple varier en fonction du nombre de satellites en vue.

Un produit programme d'ordinateur comprenant des instructions de code de programme pour l'exécution des étapes du procédé décrit, lorsque ce programme est exécuté par une unité de traitement de données d'un système de navigation, peut par ailleurs être mis en oeuvre.

**Revendications**

1. Procédé de contrôle d'intégrité d'un ensemble primaire (E) de mesures obtenues à partir de signaux de navigation émis par des satellites et fournies à un dispositif (3) de contrôle d'intégrité comprenant une pluralité de filtres de Kalman, le nombre de filtres de Kalman étant prédéterminé, le procédé comprenant les étapes de :

   - définition (SET), pour chaque filtre de Kalman, d'un ensemble secondaire ($ES_1$-$ES_L$) de mesures contenues dans l'ensemble primaire (E),
   - calcul (KAL) par chaque filtre de Kalman d'une solution de navigation à partir d'un ensemble secondaire respectif de mesures,

   le procédé étant **caractérisé en ce que** la définition (SET) des ensembles secondaires ($ES_1$-$ES_L$) respecte les principes suivants :

   - chaque mesure contenue dans l'ensemble primaire (E) est présente dans au moins un des ensembles secondaires ($ES_1$-$ES_L$),
   - pour chaque p-uplet de mesures de l'ensemble primaire, p étant un entier prédéterminé supérieur à 1, au moins un des ensembles secondaires ($ES_1$-$ES_L$) ne contient pas ledit p-uplet de mesures,
   - pour chaque ensemble secondaire ($ES_1$-$ES_L$), au moins (E) un des p-uplets est exclu dudit ensemble secondaire,

et **en ce qu'**il comprend en outre les étapes de :

- détection (DET1), pour chaque solution de navigation, d'au plus p mesures défaillantes non-présentes dans l'ensemble secondaire à partir duquel la solution de navigation est élaborée, et
- signalement (DET2) d'au plus p satellites défaillants dans l'ensemble primaire (E) à partir des résultats respectifs des détections.

2. Procédé de contrôle d'intégrité selon la revendication 1, dans lequel chaque ensemble secondaire ($ES_1$-$ES_L$) comprend au moins $3+n_c$ mesures de l'ensemble primaire (E), $n_c$ étant un nombre prédéterminé de constellations auxquelles les satellites émettant les signaux donnant les mesures de l'ensemble primaire (E) appartiennent.

3. Procédé de contrôle d'intégrité selon l'une des revendications 1 et 2, dans lequel, pour chaque mesure individuelle de l'ensemble primaire (E) et pour chaque p-uplet de mesures de l'ensemble primaire (E), il existe au moins un ensemble secondaire ($ES_1$-$ES_L$) ne contenant ni cette mesure individuelle ni ce p-uplet de mesures.

4. Procédé de contrôle d'intégrité selon l'une des revendications 1 à 3, dans lequel la définition (SET) des ensembles secondaires ($ES_1$-$ES_L$) respecte les principes suivants pour tout entier k compris entre 1 et p :

- pour chaque k-uplet de mesures de l'ensemble primaire (E), au moins un des ensembles secondaires ne contient pas ledit k-uplet de mesures,
- pour chaque ensemble secondaire, au moins un des k-uplets est exclu dudit ensemble secondaire.

5. Procédé de contrôle d'intégrité selon les revendications 1 à 4, dans lequel l'étape de signalement (DET2) signale une défaillance à partir des résultats des détections, si au moins un des résultats de première détection reporte au moins une défaillance.

6. Procédé de contrôle d'intégrité selon les revendications 1 à 5, dans lequel l'étape de signalement (DET2) signale une ou plusieurs satellites à exclure, si tous les résultats des détections reportent chacun au moins défaillance.

7. Procédé de contrôle d'intégrité selon la revendication 6, comprenant en outre une étape d'élaboration (CONS) d'une solution de navigation consolidée à partir de solutions de navigation élaborées (KAL) par les filtres de Kalman et du résultat de l'étape de signalement (DET2).

8. Dispositif de contrôle d'intégrité (3) d'un ensemble primaire de mesures obtenues à partir de signaux de navigation émis par des satellites, le dispositif comprenant :

- une unité (D) de traitement de données configurée pour définir une pluralité d'ensembles secondaires de mesures formant chacun un sous-ensemble de l'ensemble primaire,
- un banc (B) de filtres de Kalman (F1-Fl), chaque filtre de Kalman étant configuré pour élaborer une solution de navigation à partir d'un ensemble secondaire respectif,

le dispositif de contrôle d'intégrité (3) étant **caractérisé en ce que** l'unité de traitement de données (D) est configurée pour définir les ensembles secondaires selon les principes suivants :

- chaque mesure contenue dans l'ensemble primaire est présente dans au moins un des ensembles secondaires,
- pour chaque p-uplet de mesures de l'ensemble primaire, p étant un entier prédéterminé supérieur à 1, au moins un des ensembles secondaires ne contient pas ledit p-uplet de mesures, et
- pour chaque ensemble secondaire, au moins un des p-uplets est exclu dudit ensemble secondaire,

et **en ce qu'**il comprend :

- un banc (C) d'unités de détection (UD1-UDl), chaque unité de détection étant agencée en sortie d'un filtre de Kalman respectif et configurée pour détecter au plus p satellites défaillants correspondant chacun à une mesure non présente dans l'ensemble secondaire traité par ledit filtre de Kalman, p étant supérieur à 1,
- une unité de prise de décision (P) configurée pour signaler au plus p satellites défaillants à partir des résultats de détection élaborés par les unités de détection (UD1-UDl).

9. Système de navigation (2) comprenant une pluralité de récepteurs (R1-Rp) de signaux de radionavigation émis par des satellites, un dispositif (3) selon la revendication 8 adapté pour contrôler l'intégrité d'un ensemble primaire de mesures de navigation satellite acquises par la pluralité de récepteurs (R1-Rp), et une unité de consolidation (A) configurée pour élaborer une solution de navigation consolidée et des limites de protection à partir de solutions de navigation élaborées par les filtres de Kalman (F1-FI) et de satellites défaillants signalés par l'unité de prise de décision (P).

10. Système de navigation (2) selon la revendication 9, dans lequel l'unité de consolidation (A) est en outre configurée pour élaborer des limites de protection à partir de solutions de navigation élaborées par les filtres de Kalman (F1-FI) et de satellites défaillants signalés par l'unité de prise de décision (P).

11. Produit programme d'ordinateur comprenant des instructions de code de programme pour l'exécution des étapes du procédé selon l'une de revendications 1 à 7, lorsque ce programme est exécuté par une unité de traitement de données.

## Patentansprüche

1. Verfahren zum Kontrollieren der Integrität einer ersten Menge (E) von Messungen, die aus von Satelliten gesendeten Navigationssignalen gewonnen und an eine Integritätskontrollvorrichtung (3) bereitgestellt werden, die eine Vielzahl von Kalman-Filtern umfasst, wobei die Anzahl der Kalman-Filter vorbestimmt ist, das Verfahren die Schritte umfassend des:

   - Definierens (SET), für jeden Kalman-Filter, einer zweiten Menge ($ES_1$-$ES_L$) von Messungen, die in der ersten Menge (E) enthalten sind,
   - Berechnens (KAL), durch jeden Kalman-Filter, einer Navigationslösung aus einer jeweiligen zweiten Menge von Messungen,

   wobei das Verfahren **dadurch gekennzeichnet ist, dass** das Definieren (SET) der zweiten Mengen ($ES_1$-$ES_L$) den folgenden Grundsätzen folgt:

   - jede in der ersten Menge (E) enthaltene Messung ist in mindestens einer der zweiten Mengen ($ES_1$-$ES_L$) vorhanden,
   - für jedes p-Tupel von Messungen der ersten Menge, wobei p eine vorbestimmte Ganzzahl größer 1 ist, enthält mindestens eine der zweiten Mengen ($ES_1$-$ES_L$) das besagte p-Tupel von Messungen nicht,
   - für jede zweite Menge ($ES_1$-$ES_L$) ist mindestens (E) eines der p-Tupel aus der besagten zweiten Menge ausgeschlossen,

   und dadurch, dass es ferner die Schritte umfasst des:

   - Erkennens (DET1), für jede Navigationslösung, von höchstens p fehlerhaften Messungen, die nicht in der zweiten Menge, aus der die Navigationslösung erarbeitet wird, vorhanden sind, und
   - Signalisierens (DET2) von höchstens p fehlerhaften Satelliten in der ersten Menge (E) aus den jeweiligen Erkennungsergebnissen.

2. Verfahren zur Integritätskontrolle nach Anspruch 1, wobei jede zweite Menge ($ES_1$-$ES_L$) mindestens $3+n_c$ Messungen der ersten Menge (E) umfasst, wobei $n_c$ eine vorbestimmte Anzahl von Konstellationen ist, zu denen die Satelliten, welche die Signale senden, die die Messungen der ersten Menge (E) ergeben, gehören.

3. Verfahren zur Integritätskontrolle nach einem der Ansprüche 1 und 2, wobei für jede Einzelmessung der ersten Menge (E) und für jedes p-Tupel von Messungen der ersten Menge (E) mindestens eine zweite Menge ($ES_1$-$ES_L$) existiert, die weder diese Einzelmessung noch dieses p-Tupel von Messungen enthält.

4. Verfahren zur Integritätskontrolle nach einem der Ansprüche 1 bis 3, wobei das Definieren (SET) der zweiten Mengen ($ES_1$-$ES_L$) für jede Ganzzahl k zwischen 1 und p den folgenden Grundsätzen folgt:

   - für jedes k-Tupel von Messungen der ersten Menge (E) enthält mindestens eine der zweiten Mengen das besagte k-Tupel von Messungen nicht,
   - für jede zweite Menge ist mindestens eines der k-Tupel aus der besagten zweiten Menge ausgeschlossen.

**5.** Verfahren zur Integritätskontrolle nach den Ansprüchen 1 bis 4, wobei der Signalisierschritt (DET2) einen Fehler aus den Erkennungsergebnissen signalisiert, wenn mindestens eines der Ergebnisse der ersten Erkennung mindestens einen Fehler meldet.

**6.** Verfahren zur Integritätskontrolle nach den Ansprüchen 1 bis 5, wobei der Signalisierschritt (DET2) einen oder mehrere auszuschließende Satelliten signalisiert, wenn alle Erkennungsergebnisse jeweils mindestens einen Fehler melden.

**7.** Verfahren zur Integritätskontrolle nach Anspruch 6, ferner umfassend einen Schritt des Erarbeitens (CONS) einer konsolidierten Navigationslösung aus von den Kalman-Filtern erarbeiteten (KAL) Navigationslösungen und dem Ergebnis des Signalisierschrittes (DET2).

**8.** Vorrichtung (3) zum Kontrollieren der Integrität einer ersten Menge von Messungen, die aus von Satelliten gesendeten Navigationssignalen gewonnen werden, die Vorrichtung umfassend:

- eine Datenverarbeitungseinheit (D), die dazu ausgelegt ist, eine Vielzahl von zweiten Mengen von Messungen zu definieren, die jeweils eine Teilmenge der ersten Menge bilden,
- eine Bank (B) von Kalman-Filtern (F1-Fl), wobei jeder Kalman-Filter dazu ausgelegt ist, eine Navigationslösung aus einer jeweiligen zweiten Menge zu erarbeiten,

wobei die Integritätskontrollvorrichtung (3) **dadurch gekennzeichnet ist, dass** die Datenverarbeitungseinheit (D) dazu ausgelegt ist, die zweiten Mengen nach den folgenden Grundsätzen zu definieren:

- jede in der ersten Menge enthaltene Messung ist in mindestens einer der zweiten Mengen vorhanden,
- für jedes p-Tupel von Messungen der ersten Menge, wobei p eine vorbestimmte Ganzzahl größer 1 ist, enthält mindestens eine der zweiten Mengen das besagte p-Tupel von Messungen nicht, und
- für jede zweite Menge ist mindestens eines der p-Tupel aus der besagten zweiten Menge ausgeschlossen,

und dadurch, dass sie umfasst:

- eine Bank (C) von Erkennungseinheiten (UD1-UDI), wobei jede Erkennungseinheit am Ausgang eines jeweiligen Kalman-Filters angeordnet und dazu ausgelegt ist, höchstens p fehlerhafte Satelliten zu erkennen, von denen jeder einer Messung entspricht, die nicht in der von dem besagten Kalman-Filter verarbeiteten zweiten Menge vorhanden ist, wobei p größer 1 ist,
- eine Entscheidungsfindungseinheit (P), die dazu ausgelegt ist, höchstens p fehlerhafte Satelliten aus den von den Erkennungseinheiten (UD1-UDI) erarbeiteten Erkennungsergebnissen zu signalisieren.

**9.** Navigationssystem (2), umfassend eine Vielzahl von Empfängern (R1-Rp) von Funknavigationssignalen, die von Satelliten gesendet werden, eine Vorrichtung (3) nach Anspruch 8, die dazu ausgebildet ist, die Integrität einer ersten Menge von Satellitennavigationsmessungen zu kontrollieren, die von der Vielzahl von Empfängern (R1-Rp) erfasst werden, und eine Konsolidierungseinheit (A), die dazu ausgelegt ist, eine konsolidierte Navigationslösung und Schutzgrenzen zu erarbeiten aus Navigationslösungen, die von den Kalman-Filtern (F1-Fl) erarbeitet werden und fehlerhaften Satelliten, die von der Entscheidungsfindungseinheit (P) signalisiert werden.

**10.** Navigationssystem (2) nach Anspruch 9, wobei die Konsolidierungseinheit (A) ferner dazu ausgelegt ist, Schutzgrenzen zu erarbeiten aus Navigationslösungen, die von den Kalman-Filtern (F1-Fl) erarbeitet werden, und fehlerhaften Satelliten, die von der Entscheidungsfindungseinheit (P) signalisiert werden.

**11.** Computerprogrammprodukt, umfassend Programmcodeanweisungen zum Ausführen der Schritte des Verfahrens nach einem der Ansprüche 1 bis 7, wenn dieses Programm von einer Datenverarbeitungseinheit ausgeführt wird.

**Claims**

**1.** A method for integrity monitoring of a primary set (E) of measurements obtained from navigation signals sent by satellites and provided to a device (3) for integrity monitoring comprising a plurality of Kalman filters, the number of Kalman filters being predetermined, the method comprising the steps of:

- definition (SET), for each Kalman filter, of a secondary set ($ES_1$-$ES_L$) of measurements contained in the primary set (E),
- calculation (KAL) by each Kalman filter of a navigation solution from a respective secondary set of measurements,

the method being **characterised in that** the definition (SET) of the secondary sets ($ES_1$-$ES_L$) respects the following principles:

- each measurement contained in the primary set (E) is present in at least one of the secondary sets ($ES_1$-$ES_L$),
- for each p-tuplet of measurements of the primary set, p being a predetermined integer greater than 1, at least one of the secondary sets ($ES_1$-$ES_L$) does not contain said p-tuplet of measurements,
- for each secondary set ($ES_1$-$ES_L$), at least (E) one of the p-tuplets is excluded from said secondary set,

and **in that** it further comprises the steps of:

- detection (DET1), for each navigation solution, of at most p faulty measurements not present in the secondary set from which the navigation solution is prepared, and
- signalling (DET2) of at most p faulty satellites in the primary set (E) from respective results of detections.

2. Method for integrity monitoring according to claim 1, wherein each secondary set ($ES_1$-$ES_L$) comprises at least $3+n_c$ measurements of the primary set (E), $n_c$ being a predetermined number of constellations to which the satellites send signals giving the measurements of the primary set (E) belong.

3. Method for integrity monitoring according to either claim 1 or claim 2, wherein, for each individual measurement of the primary set (E) and for each p-tuplet of measurements of the primary set (E), there is at least one secondary set ($ES_1$-$ES_L$) containing neither this individual measurement nor this p-tuplet of measurements.

4. Method for integrity monitoring according to any of claims 1 to 3, wherein the definition (SET) of the secondary sets ($ES_1$-$ES_L$) respects the following principles for any integer k between 1 and p:

- for each k-tuplet of measurements of the primary set (E), at least one of the secondary sets does not contain said k-tuplet of measurements,
- for each secondary set, at least one of the k-tuplets is excluded from said secondary set.

5. Method for integrity monitoring according to claims 1 to 4, wherein the signalling step (DET2) signals a failure from results of detections, if at least one of the results of first detection reports at least one failure.

6. Method for integrity monitoring according to claims 1 to 5, wherein the signalling step (DET2) signals one or more satellites to be excluded, if all the results of detections each report at least one failure.

7. Method for integrity monitoring according to claim 6, further comprising a step of preparation (CONS) of a navigation solution consolidated from navigation solutions prepared (KAL) by the Kalman filters and from the result of the signalling step (DET2).

8. Device for integrity monitoring (3) of a primary set of measurements obtained from navigation signals sent by satellites, the device comprising:

- a data-processing unit (D) configured to define a plurality of secondary sets of measurements each forming a subset of the primary set,
- a bank (B) of Kalman filters (F1-Fl), each Kalman filter being configured to prepare a navigation solution from a respective secondary set,

the integrity monitoring device (3) being **characterised in that** the data-processing unit (D) is configured to define the secondary sets according to the following principles:

- each measurement contained in the primary set is present in at least one of the secondary sets,
- for each p-tuplet of measurements of the primary set, p being a predetermined integer greater than 1, at least one of the secondary sets does not contain said p-tuplet of measurements, and

- for each secondary set, at least one of the p-tuplets is excluded from said secondary set,

and **in that** it comprises:

- a bank (C) of detection units (UD1-UDI), each detection unit being arranged at the output of a respective Kalman filter and configured to detect at most p faulty satellites each corresponding to a measurement not present in the secondary set processed by said Kalman filter, p being greater than 1,
- a decision-making unit (P) configured to signal at most p faulty satellites from detection results prepared by the detection units (UD1-UDI).

9. Navigation system (2) comprising a plurality of receivers (R1-Rp) of radionavigation signals sent by satellites, a device (3) according to claim 8 suitable for controlling the integrity of a primary set of satellite navigation measurements acquired by the plurality of receivers (R1-Rp), and a consolidation unit (A) configured to prepare a consolidated navigation solution and protection limits from navigation solutions prepared by the Kalman filters (F1-Fl) and faulty satellites signalled by the decision-making unit (P).

10. Navigation system (2) according to claim 9, wherein the consolidation unit (A) is further configured to prepare protection limits from navigation solutions prepared by the Kalman filters (F1-Fl) and faulty satellites signalled by the decision-making unit (P).

11. Computer program product comprising program code instructions for execution of the steps of the method according to any one of claims 1 to 7, when this program is executed by a data-processing unit.

FIG. 1

FIG. 2

ACQ

SET

KAL

DET1

DET2

CONS

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2964468 A1
- EP 1752786 A1
- EP 2006707 B1